# EUROPEAN PATENT SPECIFICATION

(11) **EP 1 758 680 B1**
(45) Date of publication and mention of the grant of the patent: **13.04.2011**
(21) Application number: 05768002.7
(22) Date of filing: 13.06.2005
(51) Int. Cl.: B01J 31/14, B01J 31/16, B01J 31/02

(54) **USE OF IONIC LIQUIDS FOR DEPOSITION OF SINGLE SITE CATALYST COMPONENTS ON A SUPPORT TO GENERATE HYBRID POLYMERS**
VERWENDUNG VON IONISCHEN FLÜSSIGKEITEN ZUR ABLAGERUNG VON SINGLE-SITE-KATALYSATORKOMPONENTEN AUF EINEM TRÄGER ZUR ERZEUGUNG VON HYBRIDPOLYMEREN
UTILISATION DE LIQUIDES IONIQUES POUR LE DEPOT DE COMPOSANTS CATALYTIQUES A SITE UNIQUE SUR UN SUPPORT EN VUE D'OBTENIR DES POLYMERES HYBRIDES

(30) Priority: 17.06.2004 EP 04291536
(43) Date of publication of application: 07.03.2007
(73) Proprietor: TOTAL PETROCHEMICALS RESEARCH FELUY, 7181 Seneffe (Feluy) (BE); CENTRE NATIONAL DE LA RECHERCHE SCIENTIFIQUE (CNRS) Etablissement Public, 75016 Paris (FR)
(72) Inventor: LAVASTRE, Olivier, F-35490 Gahard (FR); BOULANGER, Loïse, F-35690 Acigne (FR)
(74) Representative: Leyder, Francis
(86) International application number: PCT/EP2005/052718
(87) International publication number: WO 2005/123253

(56) References cited:
- EP-A- 0 619 325
- US-A1- 2003 220 191
- FEHRMANN ET AL: "Continuous fixed-bed gas -phase hydroformylation using supported ionic liquid-phase (SILP) Rh catalysts" JOURNAL OF CATALYSIS, vol. 219, 2003, pages 452-455, XP002345938

## Description

The present invention discloses the use of an ionic liquid to deposit simultaneously several single site catalyst components on a support.

It is known to deposit several metallocene catalyst components on the same or on different supports in order to obtain polymers having a multimodal molecular weight distribution. A method has been described for example in EP-A-619325 wherein two metallocene components based on the same metal, one being bridged and the other being unbridged, have been deposited on the same support. The method however is long and tedious. In addition, some methods of deposition are mutually exclusive and it may thus be impossible to deposit simultaneously different components when one component is adversely qualitatively or quantitatively affected by the method used to deposit another component.

There is thus a need to develop simple methods to deposit simultaneously one or more components that do not suffer from these drawbacks.

It is an aim of the present invention to use ionic liquids to deposit in a single step one or several single site components on the same support.

It is another aim of the present invention to prepare an active catalyst system prepared from several single site components.

It is yet another advantage of the present invention to prevent leaching of the catalyst components from the support.

It is a further aim of the present invention to provide a "multisite" catalyst system wherein the concentration of each component is easily controlled.

It is also an aim of the present invention to prepare polymers having a structure and morphology intermediate between those produced by every individual catalyst component.

It is yet another aim of the present invention to prepare polymers combining the advantages offered by each individual component

Accordingly, the present invention provides a method for preparing an active catalyst system comprising one or more single site catalyst components, according to claim 1.

The term "multisite" used in this description means that one or more single site components are deposited on the same support.

Preferably, the catalyst system comprises at least two single site catalyst components.

The support is prepared from porous supports such as mineral oxides or from organic matrix.

The porous mineral oxide particles preferably have at least one of the following characteristics:
- they include pores having a diameter ranging from 7.5 to 30 nm;
- they have a porosity ranging from 1 to 4 cm³ /g;
- they have a specific surface area ranging from 100 to 1000 m²/g; and
- they have an average diameter ranging from 1 to 100 µm.

It is preferably selected from silica, alumina and mixtures thereof, more preferably, the support is silica.

Alternatively, the support may be porous beads of polystyrene.
The starting porous beads of polystyrene have a size of from 250 to 500 microns and they are prepared from cross-linked polystyrene wherein the degree of cross-linking is ranging from 0.5 to 5 %. A proper level of cross-linking must be selected: it must be sufficiently high to insure shape constraint but sufficiently low to allow absorption of the active ingredients. A degree of cross-linking of from 1 to 2 % is preferred.

The activating agent must be able to activate the catalyst components. It can be selected from alumoxanes or aluminium alkyls depending upon the nature of the catalyst components.

The aluminium alkyls are of the formula AlRₓ and can be used wherein each R is the same or different and is selected from halides or from alkoxy or alkyl groups having from 1 to 12 carbon atoms and x is from 1 to 3. Especially suitable aluminiumalkyl are dialkylaluminum chloride, the most preferred being diethylaluminum chloride (Et₂AlCl).

The preferred alumoxanes comprise oligomeric linear and/or cyclic alkyl alumoxanes represented by the formula : 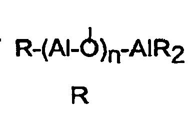 for oligomeric, linear alumoxanes
and 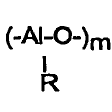 for oligomeric, cyclic alumoxanes,
wherein n is 1-40, preferably 10-20, m is 3-40, preferably 3-20 and R is a C₁-C₈ alkyl group and preferably methyl.
Methylalumoxane (MAO) is preferably used.

The ionic liquids that can be used in the present invention are prepared from a halogenated precursor of formula II

X-[-CH₂-]ₙ-R (II)

wherein X is an halogen, R is an end group and n is an integer of from 1 to 20..
The halogenated precursor of formula (II) reacts with an ionic liquid precursor, preferably with N-alkylimidazole or pyridine, in or without a solvent, said solvent if present being for example tetrahydrofuran (THF), CH₂Cl₂ or CH₃CN. The halogen anion X⁻ can be exchanged with other anions.

In the ionic liquid, the anion can be selected from Cl⁻, Br⁻, I⁻. It can also be selected from BF₄⁻, PF₆⁻, AsF₆⁻, SbF₆⁻, NO₂⁻ and NO₃⁻, N(CF₃SO₃)₂⁻ (also represented as N(Tf)₂⁻), CF₃SO₃ (also represented as Tf⁻). It can further be selected from compounds of formula AlR_{4-z}A"_{z} wherein R can be selected from an alkyl having from 1 to 12 carbon atoms, substituted or unsubstituted, or from a cycloalkyl having 5 or 6 carbon atoms, substituted or unsubstituted, wherein A" is a halogen and wherein z is an integer from 0 to 4. The cationic part of the ionic liquid may be prepared by protonation or alkylation of a compound selected from imidazole, pyrazole, thiazole, triazole, pyrrole, indone, tetrazole, pyridine, pyrimidine, pyrazine, pyridazine, piperazine or piperidine.

Preferably, the anion X⁻ is Br⁻ or N(Tf)₂⁻, and preferably the cationic part is derived from imidazolium or pyridinium.

The halogenated precursor is reacted with an ionic liquid precursor, preferably a N-alkyl- imidazole or a pyridine, either in a solvent selected typically from tetrahydrofuran (THF), CH₂Cl₂ or CH₃CN, or without solvent.

If the ionic liquid precursor is N-alkyl-imidazole, the reaction is carried out at a temperature of from 50 to 150°C, preferably of from 80 to 120 °C and for a period of time of from 1 to 24 hours, preferably of from 2 to 6 hours. The resulting intermediate product is an ion pair of formula III

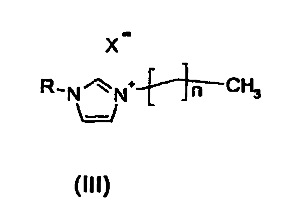

If the ionic liquid precursor is pyridine, the reaction is carried out at a temperature of from 50 to 120 °C, preferably of from 90 to 110 °C and for a period of time of from 1 to 24 hours, preferable of about 3 hours. The resulting product is an ion pair of formula IV

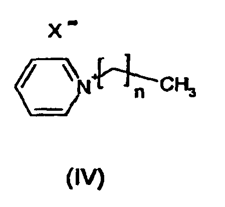

The one or more single site catalyst components can be selected from 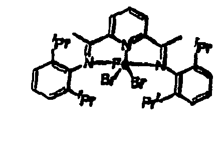 (GIBSON)
or 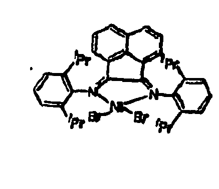 (BROOKHART)
or combinations thereof,
or ethylene bis (4,5,6,7-tetrahydro-1-indenyl, zirconium dichloride (THi), or combinations of THi and GiBSON.

The solvent can be selected from an alcane or an aromatic solvent It is preferred to use the same solvent to dissolve the ionic liquid and all catalyst components but alternatively each component can be dissolved in its own solvent and all solutions mixed together. The solvent is preferably inert with respect to the activating agent. The most preferred solvent is toluene.

The present invention also provides an active supported "multsite" catalyst system obtainable by the method described hereabove. It further discloses a method for homo- or co-polymerising alpha-olefins with the new supported "multisite" catalyst system. The alpha-olefins is preferably selected from ethylene or propylene.

The present invention further provides a method for polymerising alpha-olefins that comprises the steps of:
a) injecting into the reactor the active supported "multisite" catalyst system prepared by one of the methods described here-above;
b) injecting a monomer and one or more optional comonomers into the reactor;
c) maintaining under polymerisation conditions;
d) retrieving a polymer

The use of the ionic liquid to deposit the various single site catalyst components onto the activated support does not inhibit the activity of the various components but it produces a system that has an activity that is different from each component taken separately. The activity varies with the ionic liquid and with the catalytic components.

One of the catalyst components can be selected to oligomerise the monomer and therefore prepare a comonomer in situ.

The polymers obtained by the method of the present invention have a morphology that is a compromise between the morphologies respectively obtained with each individual catalyst component.

The main advantages of the present catalyst system are that the catalyst system is maintained on the support in addition, the concentration of each catalyst component can be controlled and maintained as selected was the ionic liquid carries all components simultaneously on the support. Finally there is no interference between the different catalyst components. The various catalytic components and the ionic liquid are preferably used in stoichiometric amounts.

Thanks to this method, active supported multi-component catalysts systems can be obtained.

### List of figures.

Figure 1 represents a picture of the granular powder of polyethylene obtained with the iron-based Gibson catalyst component in the presence of two different ionic liquids.
Figure 2 represents a picture of the chips of polyethylene obtained with the nickel-based Brookhart catalyst component used without ionic liquid or with various ionic liquids.
Figure 3 represents a picture of polyethylene obtained with a mixture of the same Gibson and Brookhart catalyst components as those used alone respectively in figures 1 and 2, used without ionic liquid or with various ionic liquids.
Figure 4 represents a picture of polyethylene obtained respectively with a Gibson catalyst component, with a Brookhart catalyst component and with a 50/50 mixture of Gibson and Brookhart catalyst components, all used with the same [Bmim]NTf₂ ionic liquid.
Figure 5 represents a picture of polyethylene obtained respectively with a Gibson catalyst component, with a Brookhart catalyst component and with a 50/50 mixture of Gibson and Brookhart catalyst components, all used with the same [G₁₂mim]Br ionic liquid.
Figure 6 represents a picture of the blocks of polyethylene obtained with a tetrahydroindenyl (THI) catalyst component used without ionic liquid or with various ionic liquids.
Figure 7 represents a picture of polyethylene obtained respectively with a Gibson catalyst component, with THI catalyst component and with a 50/50 mixture of Gibson and THI catalyst components, all used with the same [Bmim]NTf₂ ionic liquid.

### Examples.

The ionic liquid/catalyst component solution was prepared in inert conditions by dissolving the desired amount of the one or more catalyst components with one mole equivalent of ionic liquid in a corresponding volume of toluene. The solution was poured onto a silica previously impregnated with methylamuminoxane (MAO) in a hemolysis tube and the mixture was kept in contact during 30 minutes. The suspension was then filtered and the silica was washed with 0.3 mL of toluene and then three times with 0.3 mL of heptane. The silica was dried during one hour under vacuum.

A scavenger solution containing 0.1 to 0.15 mL of MAO (30 % in toluene) and 4.9 mL of heptane was added to the reactor containing 50 mL of heptane, followed by the addition into the reactor of a suspension of activated silica in 5 mL of heptane. The reactor was brought to polymerisation temperature and pressure and kept under polymerisation conditions for one hour.

The polymer so obtained was stirred in chlorhydric methanol at 5%, filtered, washed three times with methanol and once with acetone, and then dried under vacuum.

### Two ionic liquids were tested:

IL1 was 3-methyl-1-butyl-imidazolium trifluoromethanesulfonimide [Bmim]NTf₂

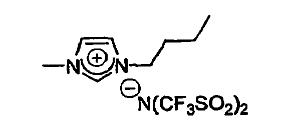

IL2 was 3-methyl-1-dodecyl-imidazolium bromide ([C₁₂mim]Br

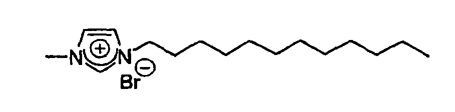

Three catalyst components were tested alone or in combination with and without ionic liquid:
C1 was a Gibson catalyst component based on iron and given by formula 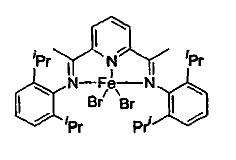
C2 was a Brookhart catalyst component based on nickel and given by formula 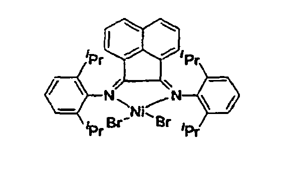
C3 was a metallocene catalyst component based on a tetrahydroindenyl ligand THI and given by formula ethylene bis(4,5,6,7-tetrahydo-1-indenyl) zirconium dichloride.

Ethylene was polymerised with various catalyst / ionic liquid combinations. The catalyst component combinations, polymerisation conditions and polymer properties are summarised in Tables I and II.

In Table I all polymerisation reactions were carried out at a temperature of 25 °C and under an ethylene pressure of 5 bars.

**TABLE I**

| catalyst | IL | m_{cata} mg | vₜₒₗᵤₑₙₑ mL | m_{impregnated silica} mg | m_{injected silica} mg | g C₂H₄ /g Si/h | Tm °C |
|---|---|---|---|---|---|---|---|
| C1 | - | 3.2 | 0.6 | 88.8 | 18 | 278 | 136 |
| C1 | IL1 | 3.2 | 0.6 | 89 | 13.4 | 205 | 140 |
| C1 | IL2 | 3.2 | 0.86 | 93 | 18 | 179 | 138 |
| C2 | - | 3.2 | 0.7 | 87.2 | 14.5 | 226 | 107^{a} & 118 |
| C2 | IL1 | 3.2 | 0.7 | 90.1 | 18.1 | 200 | 108 & 117^{b} |
| C2 | IL2 | 3.2 | 0.74 | 88.3 | 14.4 | 127 | 108 & 116^{b} |
| C1+C2 | - | 1.6+1.6 | 0.6 | 88.7 | 11.8 | 154 | 132 |
| C1+C2 | IL1 | 1.6+1.6 | 0.7 | 88.7 | 22.2 | 175 | 139 |
| C1+C2 | IL2 | 1.6+1.6 | 1.1 | 89.7 | 11.8 | 76 | 139 |

| | | | | | | | |
|---|---|---|---|---|---|---|---|
| ^{a}: main peak at 107°C ^{b}: both peaks have same intensity | | | | | | | |

Tm is the melting temperature and g C₂H₄ /g Si/h represents the consumption of ethylene per gram of silica per hour.

The amount of ionic liquid in each polymerisation was of one molar equivalent of ionic liquid with respect to the catalyst component.

The melting temperatures were obtained by Differential Scanning Calorimetry (DSC).

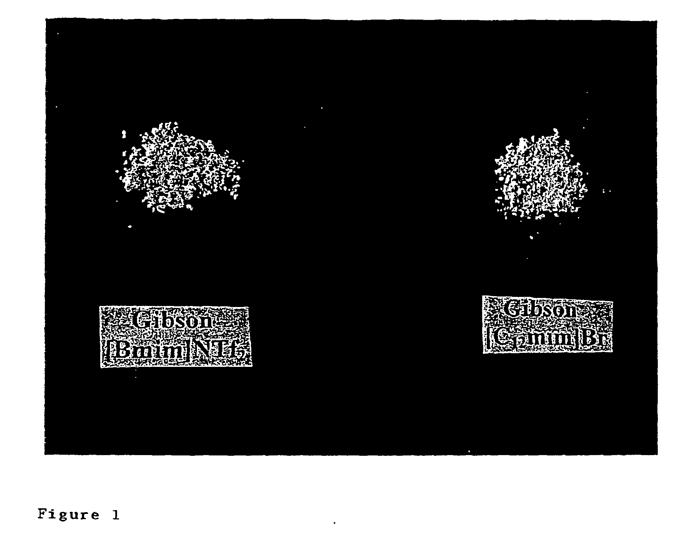

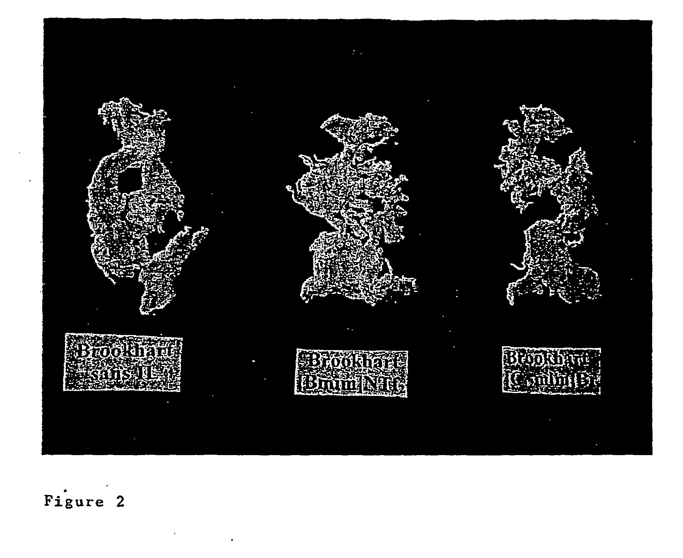

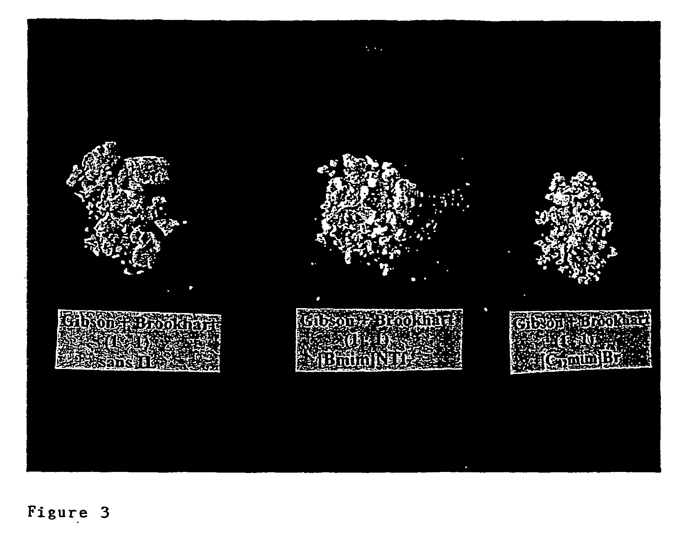

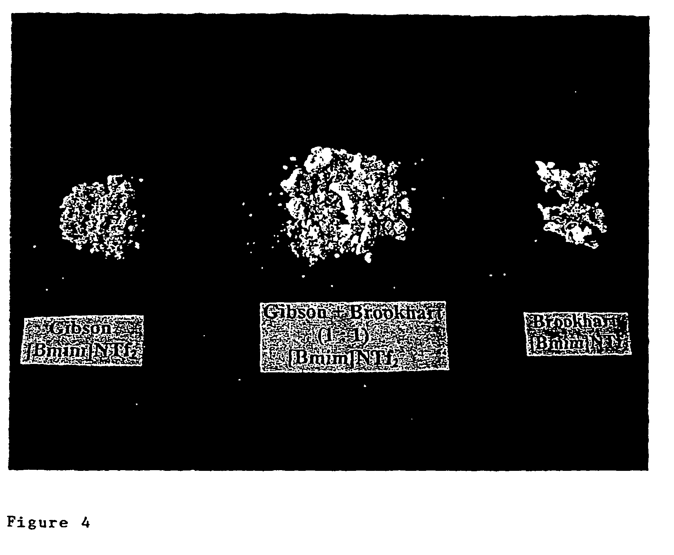

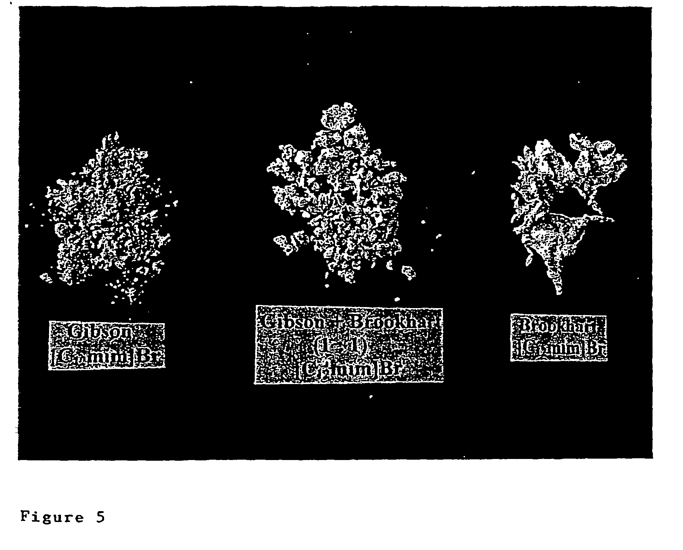

The morphology of all the polyethylene obtained using the various catalyst components of Table I with or without ionic liquid are represented in Figures 1 to 5. It can be seen that different catalyst components, when used alone, gave different polymer morphologies. When the catalyst components were used in combination, the morphology of the resulting polymer was intermediate between those obtained with the individual catalyst components. It was also observed that the nature of the ionic liquid has an influence on the morphology of a polymer obtained with a combination of catalyst components.

All polymerisation reactions in Table II were carried out at a temperature of 50 °C and under a pressure of 20 bars of ethylene.

**TABLE II.**

| catalyst | IL | m_{cata} mg | vₜₒₗᵤₑₙₑ mL | m_{impregnated silica} mg | m_{injected silica} mg | g C₂H₄ /g Si/h | Tm °C |
|---|---|---|---|---|---|---|---|
| C3 | - | 1.5 | 0.85 | 91.3 | 11.8 | 511 | 142 |
| C3 | IL1 | 1.5 | 1.08 | 88.6 | 14.5 | 369 | 140 |
| C3 | IL2 | 1.5 | 1.35 | 95.9 | 15.7 | 373 | 139 |
| C1 | IL1 | 3.2 | 0.6 | 83.4 | 13 | 305 | 140 |
| C1+C3 | IL1 | 0.56+1.5 | 0.8 | 83.8 | 18.1 | 335 | 139 |

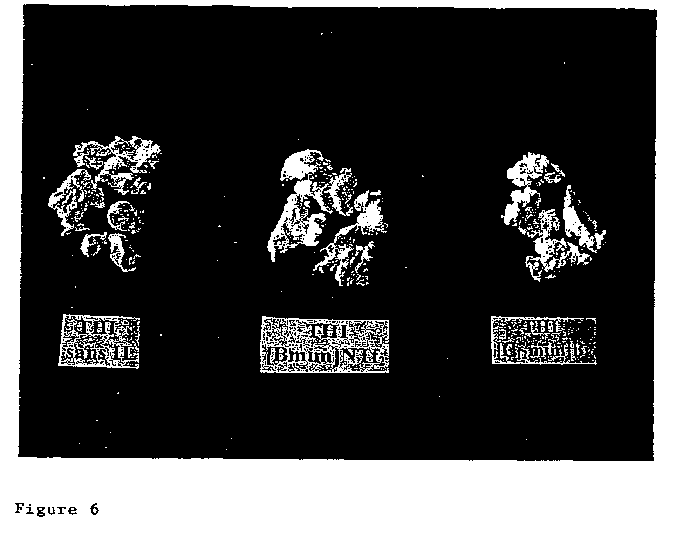

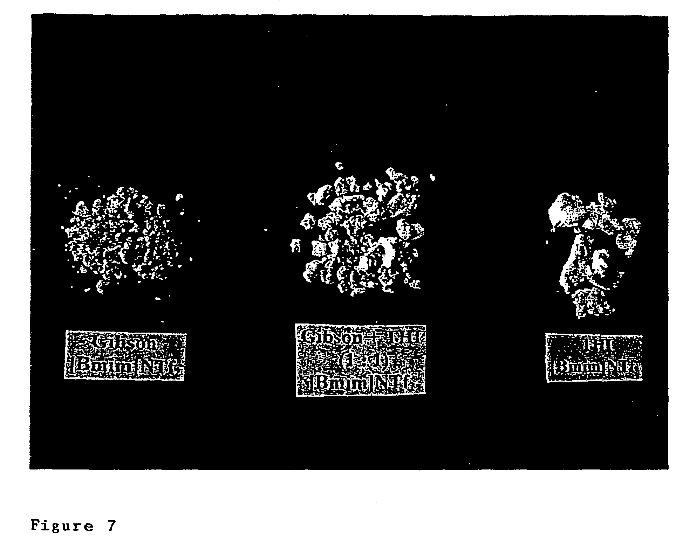

The morphology of the polyethylene obtained with the Gibson and/or THI catalyst components are displayed in Figures 6 and 7. It can be seen that the morphology of the polyethylene obtained with a mixture of catalyst components and ionic liquid is here also intermediate between those obtained with the individual components.

The method according to the present invention was further used to test the efficiency of the anchorage of different catalyst systems onto the support. For that purpose catalyst components C1 (Gibson) and C2 (Brookhart) were simultaneously deposited on a silica support, without ionic liquid and with ionic liquid IL1 as a vector, and the relative amounts of components C1 and C2 were varied. The results are reported in Table III.

**TABLE III.**

| C1 % | C2 % | IL | Vₜₒₗᵤₑₙₑ mL | m_{impregnated silica} mg | m_{iinjrcted silica} mg | g C₂H₄ /g Si/h | Tm °C |
|---|---|---|---|---|---|---|---|
| 0 | 100 | - | 0.7 | 93.1 | 18.3 | 143 | 108/120 |
| 25 | 75 | - | 0.7 | 89.8 | 24.7 | 146 | 137 |
| 50 | 50 | - | 0.7 | 95.3 | 22.7 | 203 | 138 |
| 75 | 25 | - | 0.7 | 91.6 | 18.0 | 256 | 140 |
| 100 | 0 | - | 0.7 | 92.5 | 16.0 | 278 | 139 |
| 0 | 100 | IL1 | 0.67 | 90.8 | 21.2 | 233 | 113 |
| 25 | 75 | IL1 | 0.67 | 93.0 | 16.8 | 185 | 135 |
| 50 | 50 | IL1 | 0.68 | 93.8 | 20.3 | 175 | 139 |
| 75 | 25 | IL1 | 0.69 | 83.5 | 23.6 | 213 | 140 |
| 100 | 0 | IL1 | 0.69 | 99.7 | 18.3 | 281 | 140 |

In addition, the amount of catalyst component effectively immobilised on the support was determined by measuring the amounts of nickel and iron in the impregnating solution and on the impregnated silica. The amount of nickel and iron deposited on the silica were measured by atomic absorption after treatment by fluorhydric acid. The absorption rate is defined as the ratio of absorbed metal over provided metal. The results are displayed in Table IV.

**TABLE IV.**

| Ionic liquid | Impregnating solution | | Impregnated silica | | Absorption rate | |
|---|---|---|---|---|---|---|
| | Ni (mole%) | Fe (mole%) | Ni (mole%) | Fe (mole%) | Ni (%) | Fe (%) |
| - | 22 | 78 | 23 | 77 | 75 | 71 |
| - | 46 | 54 | 47 | 53 | 74 | 67 |
| - | 72 | 28 | 74 | 26 | 75 | 68 |
| IL1 | 22 | 78 | 22 | 78 | 60 | 62 |
| IL1 | 46 | 54 | 45 | 55 | 74 | 76 |
| IL1 | 72 | 28 | 66 | 34 | 79 | 100 |

Without ionic liquid, the molar ratios Fe/Ni of the impregnating solution were preserved on the impregnated silica for all Fe/Ni molar ratios. When an ionic liquid was used as vector to deposit the catalyst components on the support, it was observed that the amount of iron absorbed was inversely proportional to the amount of iron present in the system: the poorer the impregnating solution in iron, the higher the absorption rate of iron onto the support. The ionic liquid thus has a clear influence on the absorption rate of the various catalyst components on the surface of the support.

The nature of polyethylenes produced with varying amounts of Gibson- and Brookhart-type catalyst components, deposited on a support with or without ionic liquid, was also tested by comparing their melting temperatures. From Table III, two zones of melting temperature (Tm) can be defined:
- a high melting temperature zone wherein Tm is of at least 139 °C;
- a low melting temperature zone wherein Tm is of less than 139 °C.

When no ionic liquid was used to deposit the catalyst components on the support, only the complex supported catalyst systems comprising a majority of Gibson catalyst component, of at least 75 % were in the high Tm zone whereas the other catalyst systems were in the low Tm zone.

When an ionic liquid was used to deposit the catalyst components on the support, only the complex supported catalyst systems comprising a majority of Brookhart component of at least 75 % are in the low Tm zone.

The ionic liquid thus has a significant effect on the nature of the catalyst system and therefore on the nature of the polymer produced.

## Claims

1. A method for preparing an active catalyst system comprising one or more single site catalyst components that comprises the steps of:
a) providing a support prepared from at least one porous mineral oxide;
b) Impregnating the support with an activating agent;
c) dissolving the ionic liquids and the one or more single site catalyst components either In the same solvent or In different solvents followed by mixing of all solutions;
d) impregnating the support of step b) with the solution of step c);
e) retrieving an active "multisite" catalyst component,
wherein the one or more single site catalyst component is selected from 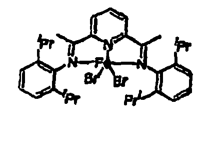 (GiBSON)
or 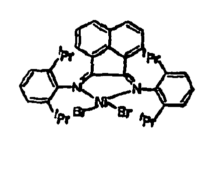 (BROOKHART)
or combinations thereof,
or ethylene bis(4,5,6,7-tetrahydro-1-indenyl, zirconium dichloride (THi), or combinations of THi and GiBSON.

2. The method of claim 1 wherein the activating agent is dissolved in a solvent with the catalyst component and the ionic liquid to prepare a solution that is poured onto the support.

3. The method of any one of claims 1 to 2 wherein the active catalyst system comprises at least two different single site catalyst components.

4. The method of any one of claims 1 to 3 wherein the support is inorganic with a porosity ranging from 1 to 4 cm³/g and a specific surface area ranging from 100 to 1000 m² /g.

5. The method of any one of claims 1 to 3 wherein the support wherein the support is a bead of polystyrene.

6. The method of any one of the preceding claims wherein the activating agent is selected from aluminium alkyl or alumoxane.

7. The method of any one of the preceding claims wherein the ionic liquid is prepared by reacting an ionic liquid precursor with an halogenated precursor of formula X-[CH₂-]ₙ-R wherein X is a halogen, R is an end group and n is an Integer of from 1 to 20.

8. The method of claim 7 wherein the ionic liquid precursor is N-alkylimidazole or pyridine.

9. The method of claim 7 or claim 8 wherein the anion X⁻ in the ionic liquid is Br⁻ or N(Tf)₂⁻.

10. An active catalyst system comprising one or more single site catalyst components obtainable by the method according to any one of claims 1 to 9.

11. A method for homo- or co-polymerising alpha-oleflns that comprises the steps of:
e) injecting the active catalyst system of claim 10 into the reactor;
f) injecting a monomer and one or more optional comonomer Into the reactor;
g) maintaining under polymerisation conditions;
h) retrieving a polymer.

12. The method of claim 11 wherein the monomer is ethylene or propylene.

## Patentansprüche

1. Verfahren zum Herstellen eines aktiven Katalysatorsystems, umfassend einen oder mehrere single-site-Katalysator-Komponenten, wobei das Verfahren die folgenden Schritte umfasst:
a) Bereitstellen eines Trägers, der aus zumindest einem porösen Mineraloxid hergestellt ist;
b) Imprägnieren des Trägers mit einem Aktivierungsmittel;
c) Auflösen der ionischen Flüssigkeiten und des einen oder der mehreren single-site-Katalysator-Komponenten entweder im gleichen Lösungsmittel oder in unterschiedlichen Lösungsmitteln, worauf das Mischen aller Lösungen folgt;
d) Imprägnieren des Trägers von Schritt b) mit der Lösung von Schritt c);
e) Rückgewinnen einer aktiven "multi-site"-KatalysatorKomponente,
wobei die eine oder mehreren single-site-Katalysator-Komponenten ausgewählt ist bzw sind aus: 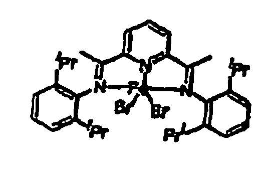 (GIBSON) oder 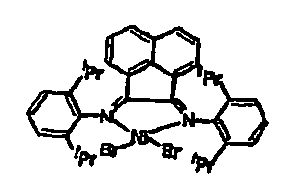 (BROOKHART) oder Kombinationen davon oder Ethylen-bis(4,5,6,7-tetrahydro-1-indenyl-zirkonium-dichlorid (THi) oder Kombinationen von THi und Gibson.

2. Verfahren nach Anspruch 1, wobei das Aktivierungsmittel in einem Lösungsmittel mit der Katalysatorkomponente und der ionischen Flüssigkeit aufgelöst wird, um eine Lösung herzustellen, die auf den Träger gegossen wird.

3. Verfahren nach einem der Ansprüche 1 bis 2, wobei das aktive Katalysatorsystem zumindest zwei unterschiedliche single-site-Katalysatorkomponenten umfasst.

4. Verfahren nach einem der Ansprüche 1 bis 3, wobei der Träger anorganisch mit einer Porosität im Bereich von 1 bis 4 cm³ und einem spezifischen Oberflächenbereich zwischen 100 und 1000 m²/g ist.

5. Verfahren nach einem der Ansprüche 1 bis 3, wobei der Träger eine Polystyrolkugel ist.

6. Verfahren nach einem der vorherigen Ansprüche, wobei das Aktivierungsmittel aus Aluminiumalkyl oder Alumoxan ausgewählt ist.

7. Verfahren nach einem der vorherigen Ansprüche, wobei die ionische Flüssigkeit durch Umsetzen eines Präkursors von ionischer Flüssigkeit mit einem halogenierten Präkursor der Formel X--[CH₂-]ₙ--R hergestellt wird, wobei X Halogen ist, R eine Endgruppe ist, und n eine ganze Zahl von 1 bis 20 ist.

8. Verfahren nach Anspruch 7, wobei der Präkursor von ionischer Flüssigkeit N-Alkylimidazol oder Pyridin ist.

9. Verfahren nach Anspruch 7 oder 8, wobei das Anion X⁻ in der ionischen Flüssigkeit Br⁻ oder N(Tf)₂⁻ ist.

10. Aktives Katalysatorsystem, umfassend einen oder mehrere single-site-Katalysator-Komponenten, erhältlich durch das Verfahren nach einem der Ansprüche 1 bis 9.

11. Verfahren zum Homo- oder Copolymerisieren von alpha-Olefinen, das die folgenden Schritte umfasst:
e) Injizieren des aktiven Katalysatorsystems nach Anspruch 10 in den Reaktor;
f) Injizieren eines Monomers und eines oder mehrerer optionalen Comonomere in den Reaktor;
g) Halten unter Polymerisationsbedingungen;
h) Rückgewinnen eines Polymers.

12. Verfahren nach Anspruch 11, wobei das Monomer Ethylen oder Propylen ist.

## Revendications

1. Procédé pour préparer un système catalyseur actif comprenant un ou plusieurs composants catalyseur à un seul site, comprenant les étapes consistant à :
a) disposer d'un support préparé à partir d'au moins un oxyde minéral poreux ;
b) imprégner le support avec un agent d'activation ;
c) dissoudre les liquides ioniques et le ou les composants catalyseurs à un seul site, soit dans le même solvant soit dans des solvants différents, opération suivie d'un mélange de toutes les solutions ;
d) imprégner le support de l'étape b) avec la solution de l'étape c) ;
e) récupérer un composant catalyseur "à sites multiples" actif,
dans lequel le ou les composants catalyseurs à un seul site sont choisis parmi 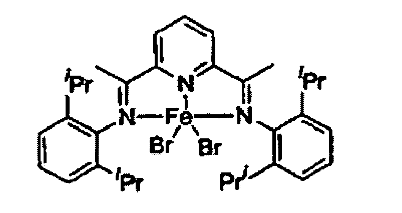 (Gibson), ou 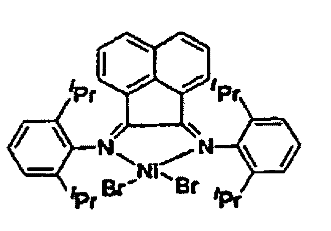 (Brookhart), ou leurs combinaisons, ou le dichlorure d'éthylènebis(4,5,6,7-tétrahydro-1-indényl)zirconium (Thi) ou les combinaisons de Thi et Gibson.

2. Procédé selon la revendication 1, dans lequel l'agent d'activation est dissous dans un solvant avec le composant catalyseur et le liquide ionique pour préparer une solution qui est versée sur le support.

3. Procédé selon l'une quelconque des revendications 1 et 2, dans lequel le système catalyseur actif comprend au moins deux composants catalyseurs à un seul site différents.

4. Procédé selon l'une quelconque des revendications 1 à 3, dans lequel le support est inorganique et a une porosité située dans la plage allant de 1 à 4 cm³/g et une surface spécifique située dans la plage allant de 100 à 1000 m²/g.

5. Procédé selon l'une quelconque des revendications 1 à 3, dans lequel le support est une perle de polystyrène.

6. Procédé selon l'une quelconque des revendications précédentes, dans lequel l'agent d'activation est choisi parmi un alkyl-aluminium et un alumoxane.

7. Procédé selon l'une quelconque des revendications précédentes, dans lequel le liquide ionique est préparé par réaction d'un précurseur de liquide ionique avec un précurseur halogéné de formule X-[CH₂-]ₙ-R dans laquelle X est un halogène, R est un groupe terminal et n est un entier de 1 à 20.

8. Procédé selon la revendication 7, dans lequel le précurseur de liquide ionique est un N-alkylimidazole ou une pyridine.

9. Procédé selon la revendication 7 ou la revendication 8, dans lequel l'anion X⁻ dans le liquide ionique est Br⁻ ou N(Tf)₂⁻.

10. Système catalyseur actif comprenant un ou plusieurs composants catalyseurs à un seul site, pouvant être obtenu par le procédé selon l'une quelconque des revendications 1 à 9.

11. Procédé pour homo- ou co-polymériser des alpha-oléfines, qui comprend les étapes consistant à :
e) injecter le système catalyseur actif de la revendication 10 dans le réacteur ;
f) injecter un monomère et un ou plusieurs comonomères facultatifs dans le réacteur ;
g) maintenir dans des conditions de polymérisation ;
h) récupérer un polymère.

12. Procédé selon la revendication 11, dans lequel le monomère est l'éthylène ou le propylène.
